# EUROPEAN PATENT APPLICATION

(11) **EP 2 045 793 A1**
(43) Date of publication of application: **08.04.2009**
(21) Application number: 07745228.2
(22) Date of filing: 14.06.2007
(51) Int. Cl.: G09B 29/00, G01C 21/00, G06T 11/60, G08G 1/0969, G09B 29/10

(54) **MAP DISPLAY SYSTEM**

(30) Priority: 21.07.2006 JP 2006199195
(71) Applicant: Panasonic Corporation, Kadoma-shi Osaka 571-8501 (JP)
(72) Inventor: NAGASHIMA, Kazumasa c/o Panasonic Corp., 1-61 2-chome, Chuo-ku Osaka-shi 540-6207 (JP); OHDACHI, Eriko c/o Panasonic Corp., 1-61 2-chome, Chuo-ku Osaka-shi 540-6207 (JP); KATTA, Noboru c/o Panasonic Corp., 1-61 2-chome, Chuo-ku Osaka-shi 540-6207 (JP)
(74) Representative: Pautex Schneider, Nicole Véronique
(86) International application number: PCT/JP2007/061971
(87) International publication number: WO 2008/010365

(57) **Abstract**

The map display system according to the present invention can reduce a processing workload on a processor. The map display system includes a first map image generating section configured to generate a first map image (**304a**), a second map image generating section configured to generate a second map image (**304b**) larger in scale than the first map image (**304a**) at intervals lower than intervals which the first map image (**304a**) is generated at, a first display device (**30**) configured to display a first composite map image (**306a**) generated by overlaying, on the first map image (**304a**) generated by the first map image generating section, a first mark image (**305a**) indicating a current position and a traveling direction of a moving object, a second display device (**31**) configured to display a second composite map image (**306b**) generated by overlaying, on the second map image (**304b**) generated by the second map image generating section, a second mark image (**305b**) indicating the current position and the traveling direction of the moving object.

## Description

### Field of the Invention

The present invention relates to a map display system for displaying two or more map images different in scale from each other.

### Background of the Invention

In the above-mentioned conventional map display system, two map data different in scale from each other are firstly read from map data stored in CD-ROM. Two image data are then generated from the map data, and respectively stored in first and second video random access memory (VRAM) by a processor. The image data stored in the first and second VRAM are respectively converted by the first and second video controllers to video signals to be respectively outputted to first and second display devices so that the above-mentioned map display system can display two road maps different in scale from each other on the first and second display devices. It is easy for a driver to check a travelling route or the like. Here, scales of two road maps to be displayed on the first and second display devices are determined by a user through a setting menu (see for example Patent document 1).
Patent document 1: Japanese Patent Laying-Open Publication No. H09-257497

### Disclosure of the Invention

### Problems to be solved by the Invention

The above-mentioned conventional map display system however encounters such a problem that a heavy workload, resulting from the fact that two different image data generated with the same frequency, is imposed on a processor.

It is therefore an object of the present invention to provide a map display system which can reduce a processing workload on a processor.

### Means for solving the Problems

In order to attain the above-mentioned object, a map display system according to the present invention comprises: a first map image generating section configured to generate a first map image; a second map image generating section configured to generate a second map image larger in scale than the first map image at intervals lower than intervals at which the first map image is generated; and a display section configured to display the first map image generated by the first map image generating section and the second map image generated by the first map image generating section.

The map display system according to the present invention may be realized by an integrated circuit as another aspect.

### Advantageous Effect of the Invention

In the map display system according to the present invention, the second map data larger in scale than the first map data is generated at intervals lower than intervals at which the first map image is generated. Therefore, the map display system according to the present invention can reduce a processing workload on a processor.

### Brief Description of the Drawings

FIG. **1** is a block diagram illustrating a configuration of a map display system according to one embodiment of the present invention.
FIG. **2** is a schematic view illustrating a display section installed in a vehicle as part of the map display system according to one embodiment of the present invention.
FIG. **3** is a schematic diagram illustrating data flow to be controlled by a control section forming part of the map display system according to one embodiment of the present invention.
FIG. **4** is a schematic view illustrating a map image, a mark image, and a composite map image generated by the map display system according to one embodiment of the present invention.
FIG. **5** is a flow chart explaining an operation of the map display system according to one embodiment of the present invention.
FIG. **6** is a flow chart explaining in detail part of the flow chart of FIG. 5.
FIG. **7** is a flow chart explaining in detail part of the flow chart of FIG. 6.
FIG. **8** is a first example of images displayed by the display section forming part of the map display system according to one embodiment of the present invention.
FIG. **9** is a second example of images displayed by the display section forming part of the map display system according to one embodiment of the present invention.
FIG. **10** is a third example of images displayed by the display section forming part of the map display system according to one embodiment of the present invention.
FIG. **11** is fourth example of images displayed by the display section forming part of the map display system according to one embodiment of the present invention.
FIG. **12** is a fifth example of images displayed by the display section forming part of the map display system according to one embodiment of the present invention.
FIG. **13** is a sixth example of images displayed by the display section forming part of the map display system according to one embodiment of the present invention.

### Explanation of the Reference Numerals

- **1:**: map display system
- **2:**: control section (integrated circuit)
- **10:**: CPU
- **11:**: RAM
- **12:**: ROM
- **13:**: storage device
- **3:**: display section
- **30:**: first display device
- **31:**: second display device
- **4:**: input section
- **40:**: first input device
- **41:**: second input device

### Preferred Embodiment of the Invention

One preferred embodiment of the map display system according to the present invention will hereinafter be described with reference to accompanying drawings.

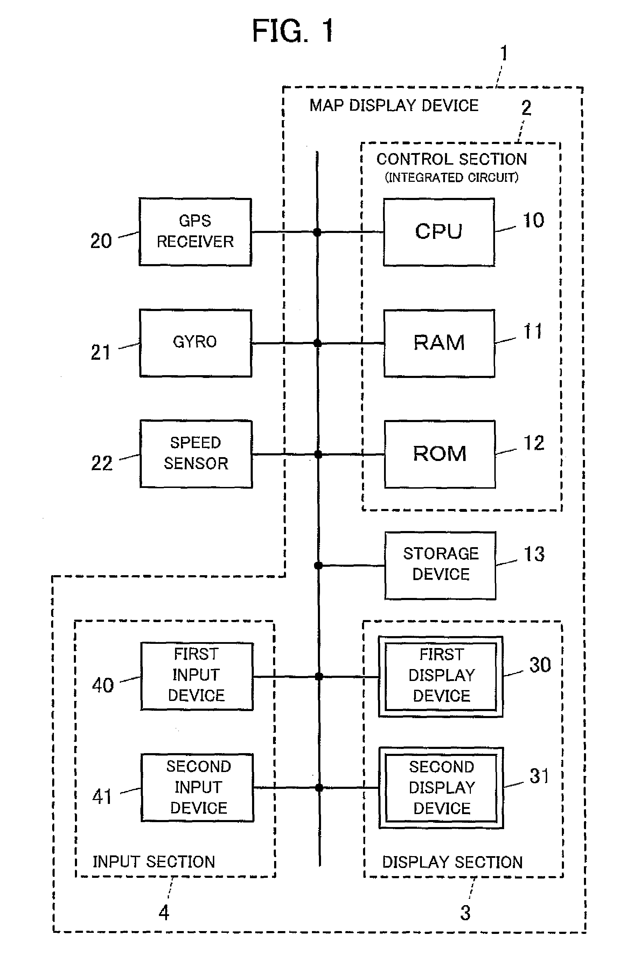

FIG. **1** is a block diagram illustrating a configuration of the map display system **1** according to the preferred embodiment of the present invention. As shown in FIG. **1**, the map display system **1** is installed in a vehicle exemplified as a typical example of a moving object, and comprises at least an input section **4**, a storage device **13**, a control section **2**, and a display section **3**.

The storage device **13** includes a memory medium such as magnetic disc (e.g., hard disc), optical disc (e.g., DVD (digital versatile disc)), or semiconductor memory. The memory medium includes, as well as a program to be executed by a CPU (central processing section) **10** which will hereinafter be described, a map database required to generate a map image, to search an optimum route, or to perform another navigation functions. The map database includes geographic information previously prepared in every scale, and required to display the map image. The geographic information includes information on geographies such as for example roads, intersections, buildings and rivers, and information on explanations and/or advertisements about each geography. The geographic information further includes information about connection between two or more roads, the number of lanes of each road, and/or traffic regulation such as one-way road and the like.

The control section **2** includes, in addition to the CPU **10**, a RAM (random access memory) **11** and a ROM (read only memory) **12**. The CPU **10** loads the program from the ROM **12** and the storage device **13** into the RAM **11**, and executes the program loaded into the RAM **11** to control each part of the map display system **1**. For example, the CPU **10** determines a current position of the vehicle and a direction in which the vehicle is traveling on a map by using an output from a GPS receiver **20**, an output from a gyro **21**, an output from a speed sensor **22**, and map data loaded from the storage device **13**. Further, the CPU **10** generates, in the RAM **11**, a map image (hereinafter referred to as "first map image") indicative of an area surrounding the vehicle, the first map image being displayed by a first display device **30** which will hereinafter be described. The CPU **10** generates, in the RAM **11**, a map image (hereinafter referred to as "second map image") indicative of an area surrounding the vehicle, and different in scale from the first map image.

In the following description, scales of maps are respectively represented by scales. The CPU **10** adds two scales (hereinafter referred to as "scale image") to the first and second map images. Each of the scales has a linear object predetermined in length, and a numeric value defined as an actual distance. If, for example, the numeric value of the scale added to the map is reduced, the scale of the map is increased. As a result, the map is zoomed in, and displayed in detail as a narrow-area map. If, on the other hand, the numeric value of the scale added to the map is increased, the scale of the map is reduced. As a result, the map is zoomed out, and displayed as a wide-area map. For example, the map displayed by the second display device **31** with a scale indicating a distance of 400 meters indicates a wide area in comparison with the map displayed by the first display device **30** with a scale indicating a distance of 50 meters.

In this embodiment, the input section **4** includes a first input device **40**, and a second input device **41**. Each of the first and second input devices **40** and **41** is constituted by a remote controller or a touch panel. The first input device **40** has a button switch operable to change the scale (hereinafter referred to as "scale **A**") of the map to be displayed by the first display device **30**, while the second input device **41** has a button switch operable to change the scale (hereinafter referred to as "scale **B**") of the map to be displayed by the second display device **31**. Therefore, it is possible for a user to designate each scale of the maps to be displayed by the first and second display devices **30** and **31**.

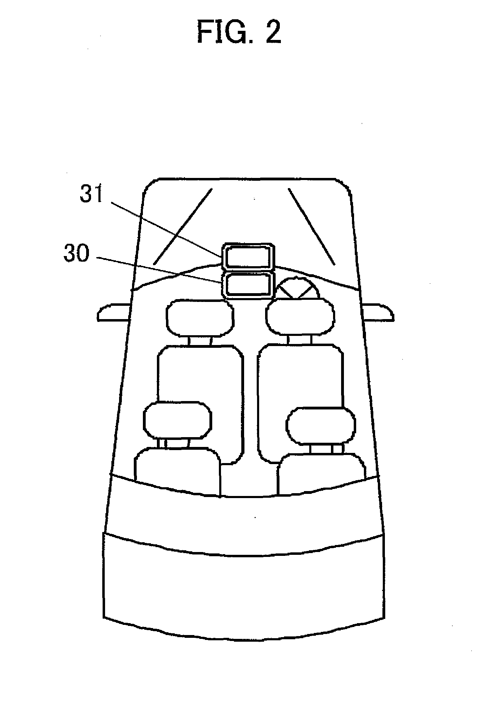

The display section **3** includes a first display device **30** and a second display device **31**. Each of the first and second display devices **30** and **31** is constituted by for example a liquid crystal display device, or an organic electro-luminescence display device. As shown in FIG. **2**, the first and second display devices **30** and **31** are arranged in a place that a vehicle occupant (e.g., driver) can visually recognize the displayed information.

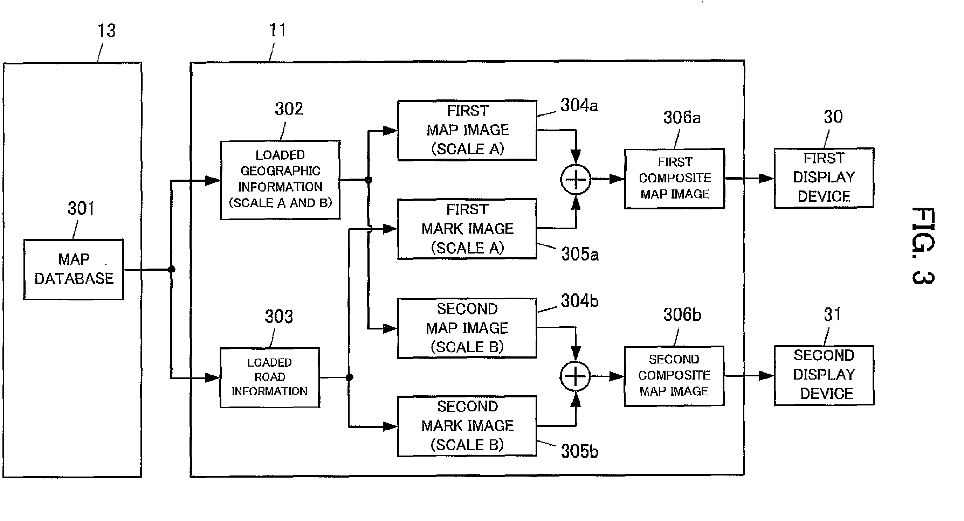

FIG. **3** is a schematic diagram illustrating the flow of data processing in the control section **2** shown in FIG. **1**. Only the storage device **13**, the RAM **11**, and the first and second display devices **30** and **31** are illustrated in FIG. **3**, but this is just for the sake of simplicity.

The storage device **13**, as shown in FIG. **3**, stores a map database **301** including road information and geographic information previously prepared in every scale.

The geographic information corresponding to the scales **A** and **B** are read by the CPU **10** from the map database **301**, and then expanded in the RAM **11** of the control section **2** as loaded geographic information **302** corresponding to the scales **A** and **B**. The loaded geographic information **302** is used as a basis for the first and second map images. Further, the loaded geographic information **302** to be required to generate at least one frame of the first and second map images is expanded in the RAM **11**.

The road information is read by the CPU **10** from the map database **301** at periodic intervals, expanded as loaded road information **303** in the RAM **11** of the control section **2**, and used to identify a current position and a current traveling direction of the vehicle on each map. The loaded road information **303** is also used with calculation of coordinates and direction of the mark image (hereinafter referred to as "first mark image") to be overlaid on the first map image, and calculation of coordinates and direction of the mark image (hereinafter referred to as "second mark image") to be overlaid on the second map image.

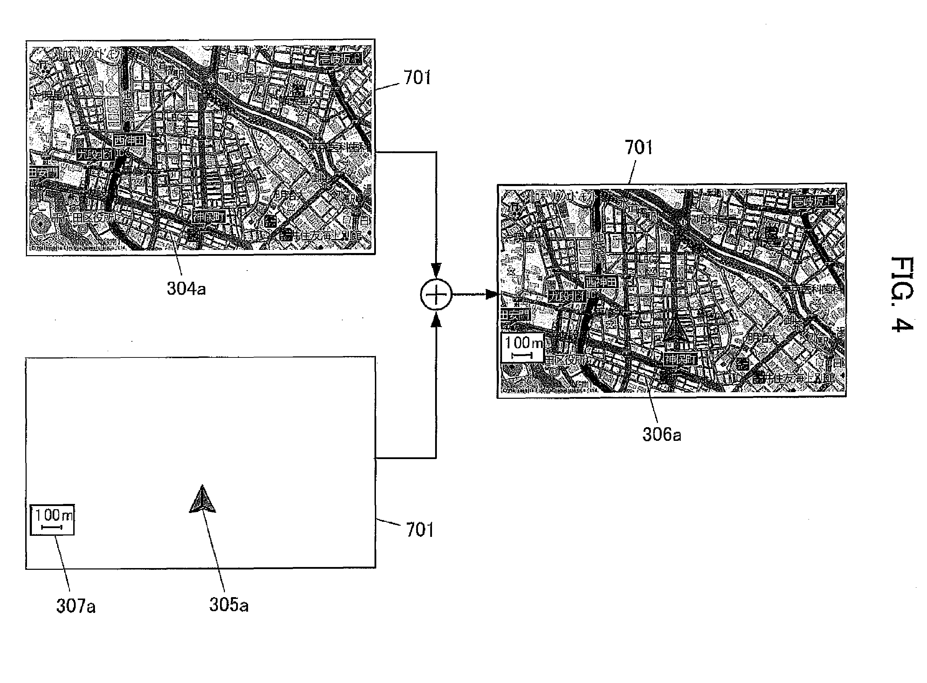

The first map image **304a** is generated by the CPU **10** on the basis of the loaded geographic information **302**, and represents one frame of a map (with the scale **A**) to be displayed by the first display device **30** as shown in FIG. **4**. If changing from a current display mode to another display mode such as heading up and three dimensional modes, the CPU **10** processes the first map image **304a** to rotate or change the direction of the first map image **304a**, or if the scale of the first map image **304a** is specifically designated by the first input device **40**, the CPU **10** scales up or down the first map image **304a** on the basis of a scale designated specifically by the first input device **40**, and extends the first map image **304a** in the RAM **11**.

As will be seen from FIG. **3**, there is no difference between the first map image **304a** and the second map image **304b**, except that the second map image **304b** is generated from the loaded geographic information **302** corresponding to the scale **B** different from the scale **A**. Therefore, the second map image **304b** will not described hereinafter.

The first mark image **305a** stored in for example the storage device **13** is overlaid on the first map image **304a** corresponding to the scale **A**, and indicates a current position and a travelling direction of the vehicle on the map with the scale **A**. More specifically, the first composite map image **306a** is generated on the RAM **11** through step of overlaying the first mark image **305a** on the first map image **304a** under the condition that coordinates and a direction of the first mark image **305a** on the map with the scale **A** correspond to the current position and the traveling direction of the vehicle.

In the same manner, the second mark image **305b** stored in for example the storage device **13** is overlaid on the second map image **304b** corresponding to the scale **B**, and indicates a current position and a travelling direction of the vehicle on the map with the scale **B**. More specifically, the second composite map image **306b** is generated on the RAM **11** through step of overlaying the second mark image **305b** on the second map image **304b** under the condition that coordinates and a direction of the second mark image **305b** on the map with the scale **B** correspond to the current position and the traveling direction of the vehicle.

The operation of overlaying the first mark image **305a** on the first map image **304a** will be specifically described hereinafter with reference to FIG. **4**, which is a schematic view of a region **701** to be displayed on a screen of the first display device **30**.

The CPU **10** generates the first map image **304a** by performing various processing such as rotation and scaling of the loaded geographic information **302** in the RAM **11**.

Further, the first mark image **305a** is generated by the CPU **10** in the RAM **11**. The first mark image **305a** is used for displaying the coordinates position at which the vehicle currently is present in the region **701** and a direction to which the vehicle currently travels as shown in FIG. **4**. In this embodiment, the first scale image **307a** for indicating the scale of the first map image **304a** is also generated by the CPU **10**.

As shown in FIG. **4**, the CPU **10** generates the first composite map image **306a** by overlaying the first mark image **305a** on the first map image **304a** in the RAM **11**.

Further, the CPU **10** generates the second composite map image **306b** in the same manner as the first composite map image **306a**.

The first and second composite map images **306a** and **306b** are respectively inputted into the first and second display devices **30** and **31**, while the CPU **10** controls the first and second display devices **30** and **31** to have the first display device **30** display the first composite map image **306a** (scale **A**), and to have the second display device **31** display the second composite map image **306b** (scale **B**).

As will be seen from FIG. **4**, the first map image **304a** is, in general, incomparably larger than the first mark image **305a** in amount of information. Therefore, a processing workload is imposed on the CPU 10 while the first map image **304a** is generated by the CPU **10**, and is much larger than a processing workload to be imposed on the CPU **10** while the first mark image **305a** is generated by the CPU **10.** Similarly, a processing workload is imposed on the CPU **10** while the second map image **304b** is generated by the CPU **10**, and is much larger than a processing workload to be imposed on the CPU **10** while the first mark image **305b** is generated by the CPU **10**.

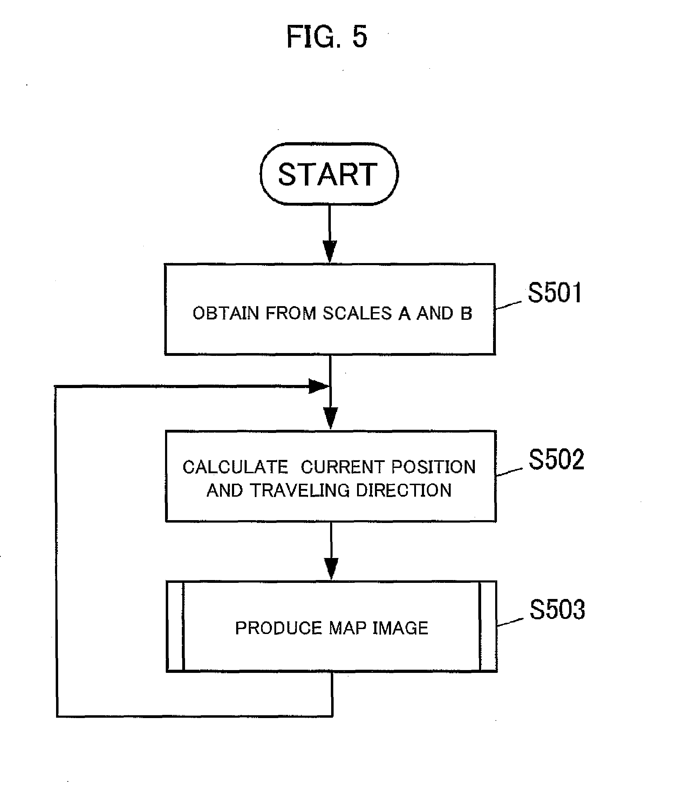

The operation of the map display system **1** shown in FIG. **1** will be then described hereinafter with reference to flow charts of FIGs. **5** to **7**.

FIG **5** is a main flow chart illustrating a general operation to be performed in the map display system **1** shown in FIG. **1**. The general operation of the map display system **1** will be explained hereinafter with reference to FIG. **5**.

In the map display system **1**, a user can designate the scale **A** of the map to be displayed by the first display device **30** by operating the first input device **40**, and designate the scale **B** of the map to be displayed by the second display device **31** by operating the second input device **41**. The scales **A** and **B** designated by the user are received by the CPU **10** from the first and second input devices **40** and **41** (in step **S501**).

While the vehicle is traveling, the current position of the vehicle is changing with time. Therefore, the current position and the current traveling direction of the vehicle are calculated at periodic intervals by the CPU **10** (in step **S502**). In this step, the CPU **10** calculates the current position and the current traveling direction of the vehicle on the basis of outputs from the GPS receiver **20**, the gyro **21**, and the speed sensor **22**, and adjusts the current position and the current traveling direction of the vehicle to the coordinates and a direction of a road on the map. Then, the CPU **10** generates a map image surrounding the current position of the vehicle (in step **S503**), and performs the above operations in steps **S502** and **S503** at periodic intervals.

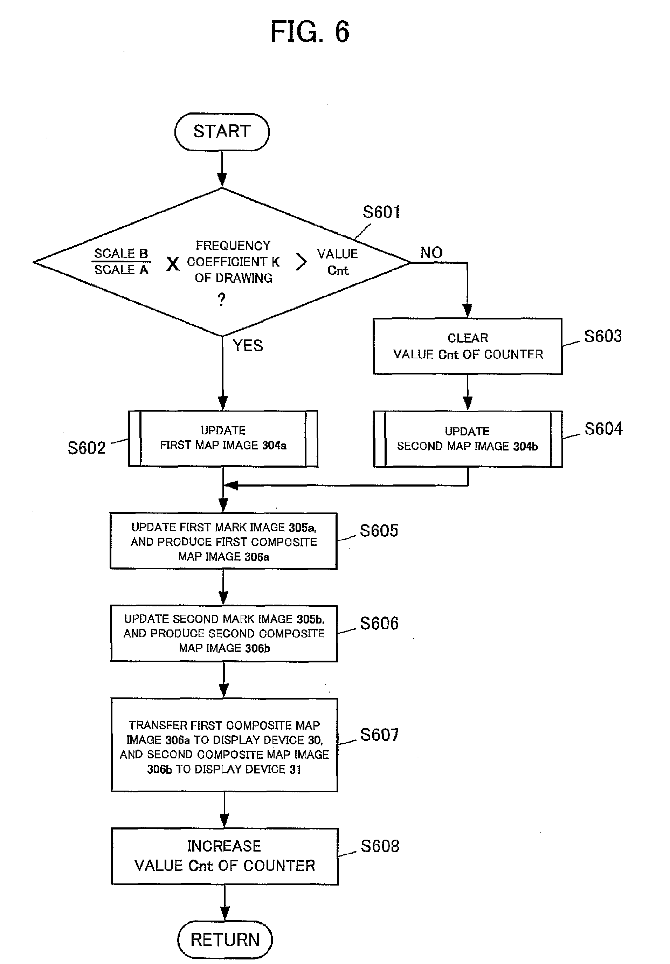

FIG. **6** is a flow chart explaining in detail the data processing to be performed in step **S503.** The focus of the routine based on the flow chart of FIG. **6** is to reduce a processing workload by decreasing an update rate of a large-scaled map. Therefore, the update rate of each map is controlled on the basis of a ratio of the scale of the map displayed by the first display device **30** and the scale of the map displayed by the second display device **31**.

The following simplified explanation is based on assumption that the scale **A** of the map displayed by the first display device **30** is smaller than the scale **B** of the map displayed by the second display device **31**, and more specifically the first display device **30** zooms in and displays an area smaller than the map displayed by the second display device **31**.

The CPU **10** makes a determination on whether or not a value obtained by dividing the scale **B** received in step **S501** by the scale **A** and multiplied by a predetermined coefficient "K" is larger than a value **Cnt** of a counter (in step **S601**). Here, the coefficient "**K**" is defined on the basis of each system, and equal to or smaller than numeral "1". The value **Cnt** of the counter is initialized if the system is started or rebooted.

If the answer in step **S601** is "**Yes**", the CPU **10** generates and updates, in the manner previously explained with reference to FIGS. **3** and **4**, the first map image **304a** indicating a map with a scale **A** (in step **S602**).

If, on the other hand, the answer in step **S601** is "No", the CPU **10** resets the value **Cnt** of the counter (in step **S603**), and then the CPU **10** generates and updates, in the manner previously explained, the second map image **304b** indicating a map with a scale **B** (in step **S604**).

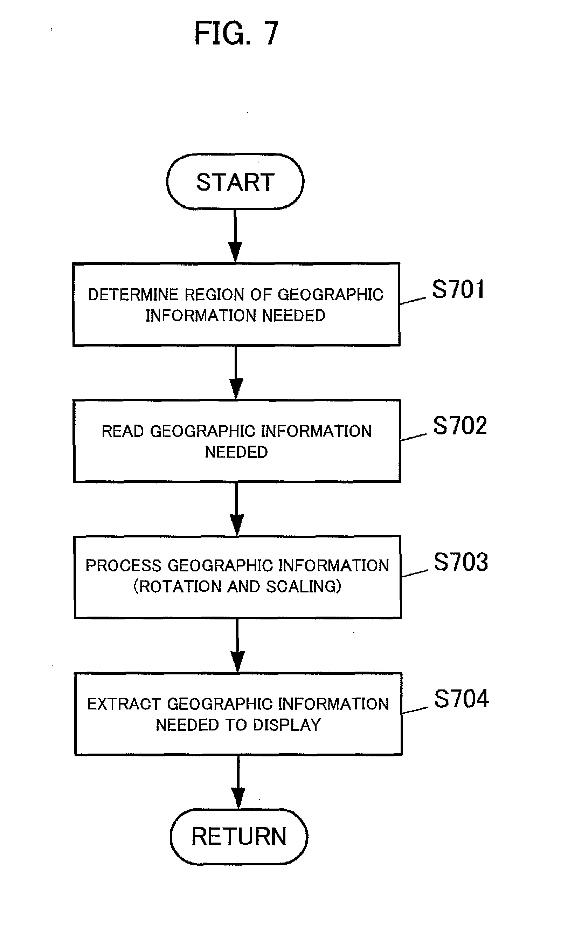

The data processing to be performed in steps **S602** and **S604** is then described in detail with reference to FIG. **7**.

As shown in FIG. **7**, the CPU **10** specifies an area forming part of the map under the condition that the current position of the vehicle corresponds to points fixed on the first and second display devices **30** and **31** (for example, the center of each screen) in step **S701**, and then loads geographic information corresponding to the specified area from the memory device **13** into the RAM **11** (in step **S702**).

If necessary, the CPU **10** rotates and/or scales the loaded geographic information **302** (in step **S703**). Then, the CPU **10** generates the first and second map images **304a** and **304b** be respectively displayed by the first and second display devices **30** and **31** by extracting sections necessary to generate the first and second map images **304a** and **304b** from the loaded geographic information **302** (in step **S704**). The CPU **10** completes the data processing of steps **S602** and **S604** by completing the above-mentioned routines.

The CPU **10** performs the operation in step **S605** after step **S602** or step **S604.** In step **S605,** the CPU **10** identifies coordinates and a direction of the first mark image **305a** on the first map image **304a.** As a method of identifying the coordinates and the direction of the first mark image **305a** on the first map image **304a**, the CPU **10** converts the current position of the vehicle on the map into the current position of the vehicle on the first map image **304a** (hereinafter referred to as "first current on-screen position"), and converts the current traveling direction of the vehicle on the map into the current traveling direction of the vehicle on the first map image **304a** (hereinafter referred to as "first current on-screen direction"). The CPU **10** generates the first mark image **305a** at the first current on-screen position, and directs the first mark image **305a** in the first current on-screen direction. Additionally, the CPU **10** generates a first scale image **307a** shown in FIG. **4**.

Further, the CPU **10** generates the first composite map image 306a in step **S605** by overlaying the first mark image **305a** on the first map image 304a in the RAM **11**.

The CPU **10** performs the operation in step **S606** after step **S605.** In step **S606,** the CPU **10** identifies coordinates and a direction of the second mark image **305b** on the second map image **304b**. As a method of identifying the coordinates and the direction of the second mark image **305b** on the second map image **304b**, the CPU **10** converts the current position of the vehicle on the map into the current position of the vehicle on the second map image **304b** (hereinafter referred to as "second current on-screen position"), and converts the current traveling direction of the vehicle on the map into the current traveling direction of the vehicle on the second map image **304b** (hereinafter referred to as "second current on-screen direction"). The CPU **10** generates the second mark image **305b** at the second current on-screen position, and directs the second mark image 305b in the second current on-screen direction. Additionally, the CPU **10** generates a scale image (not shown).

Further, the CPU **10** generates the second composite map image **306b** in step **S606** by overlaying the second mark image **305b** on the second map image **304b** in the RAM **11**.

The method of identifying the coordinates and the direction of the first mark image **305a** on the first map image **304a**, and the coordinates and the direction of the second mark image **305b** on the second map image **304b** in steps **S605** and **S606** will be specifically described.

If the CPU **10** generates, from the loaded geographic information **302**, the first and second map images **304a** and **304b** corresponding to respective screens, the CPU **10** identifies latitudes and longitudes at four corners of each of the first and second map images **304a** and **304b**, and calculates the coordinates of the first mark image **305a** on the first map image **304a**, and the coordinates of the second mark image **305b** on the second map image **304b** by using the latitudes and longitudes, and the current position calculated in step **S502.**

If the CPU **10** generates, from the loaded geographic information **302**, the first and second map images **304a** and **304b** corresponding to respective screens, the CPU **10** identifies the direction of the map represented by each map image by using latitudes and longitudes identified at two corners next to each other, and calculates the direction of each of the first and second mark images **305a** and **305b** by using the direction of each map, and current positions calculated in step **S502.**

The first and second composite map images **306a** and **306b** stored in the RAM **11** are respectively transmitted to the first and second display devices **30** and **31** by the CPU **10** (in step **S607**) after step **S606.** The first display device **30** displays the received first composite map image **306a** (scale **A**) on its screen, while the second display device 31 displays the received second composite map image **306b** (scale **B**) on its screen.

After step **S607,** the CPU **10** increases the value **Cnt** of the counter (in step **S608**) by a predetermined value (for example a numeral "1"). This is the end of step **S503.**

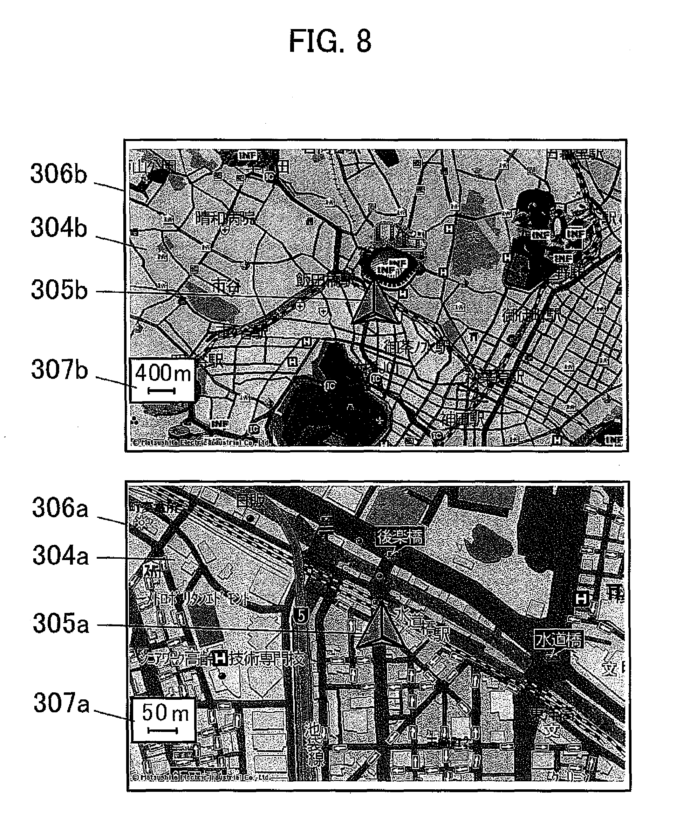

The following description has an assumption that a scale of 50 meters and a scale of 400 meters are respectively selected as scales of the maps to be displayed by the first and second display devices **30** and **31** as shown in FIG. **8**. The changes of the first and second composite map images **306a** and **306b** to be displayed by the first and second display devices **30** and **31** will be explained hereinafter on the basis of the above-mentioned processing.

Here, the coefficient **K** is set to 0.5, and the value **Cnt** of the counter is set to an initial value "1". The scale of the map displayed by the first display device **30** is 50 meters. Therefore, the scale **A** is 50m. On the other hand, the scale of the map displayed by the second display device **31** is 400 meters. Therefore, the scale **B** is 400m.

If scale **B** / scale **A** × coefficient **K** = 400m / 50m × 0.5 = 4, and the value **Cnt** of the counter = 1, the determination is made that the answer is "YES" in step **S601** of the first round of the operation based on the flow chart of FIG. **6**. Then, the CPU **10** proceeds to step **S602,** and updates the first map image **304a** in step **S602** on the basis of the current position and the current traveling direction of the vehicle in order to point the first mark image **305a** in an upward direction at the center of the screen.

The CPU **10** points the first mark image 305a in an upward direction at the center of the first map image **304a** updated in step **S601** of the flow chart of FIG. **6**, and generates the first composite map image 306a by overlaying the updated first mark image 305a and the first scale image **307a** (see FIG. **4**) on the first map image **304a**.

The CPU **10** does not execute a routine corresponding to step **S604** of this round, in other words, does not update the second map image **304b** in step **S604** of this round. Then, the CPU **10** updates the second mark image **305b**, on the basis of the current position and the current traveling direction of the vehicle, on the second map image **304b** held in the RAM **11** without being updated in step **S604,** and generates the second composite map image **306b** by overlaying the updated second mark image **305b** and the second scale image **307b** on the second map image **304b**.

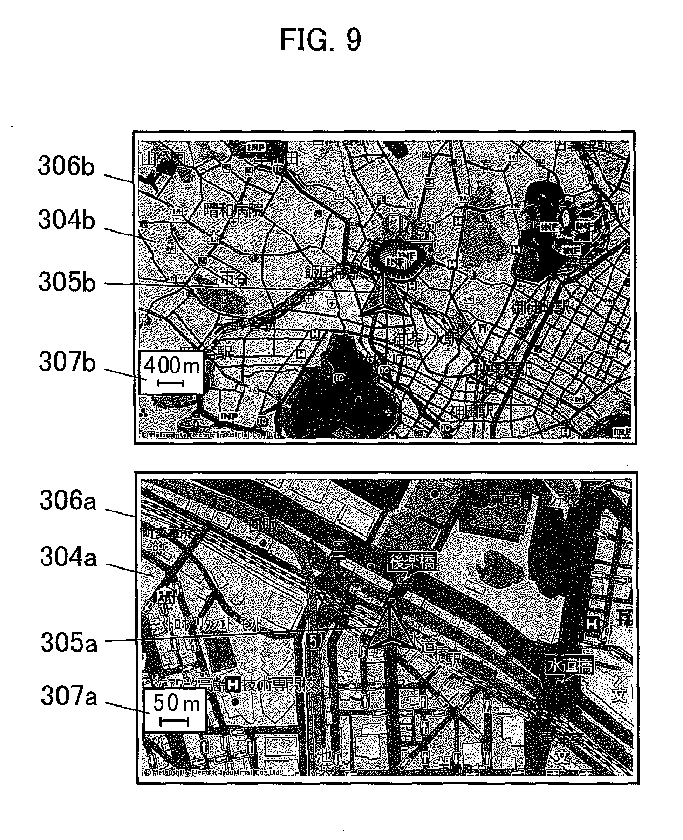

In step **S607,** the first and second composite map images **306a** and **306b** are respectively transferred to the first and second display devices **30** and **31** at the same time, and displayed as shown in FIG. **9**.

In step **S608,** the CPU **10** increases the value **Cnt** of the counter to a numeral "2", and completes the first round of operation based on the flow chart of FIG. **6**.

The CPU 10 repeats the operation based on the flow chart of FIG. **5**, calculates a current position of the vehicle and a direction in which the vehicle is traveling in step **S502** of the second round, start to generate map images in step **S503,** and proceeds to step **S601** of the second round of operation based on the flow chart of FIG. **6**.

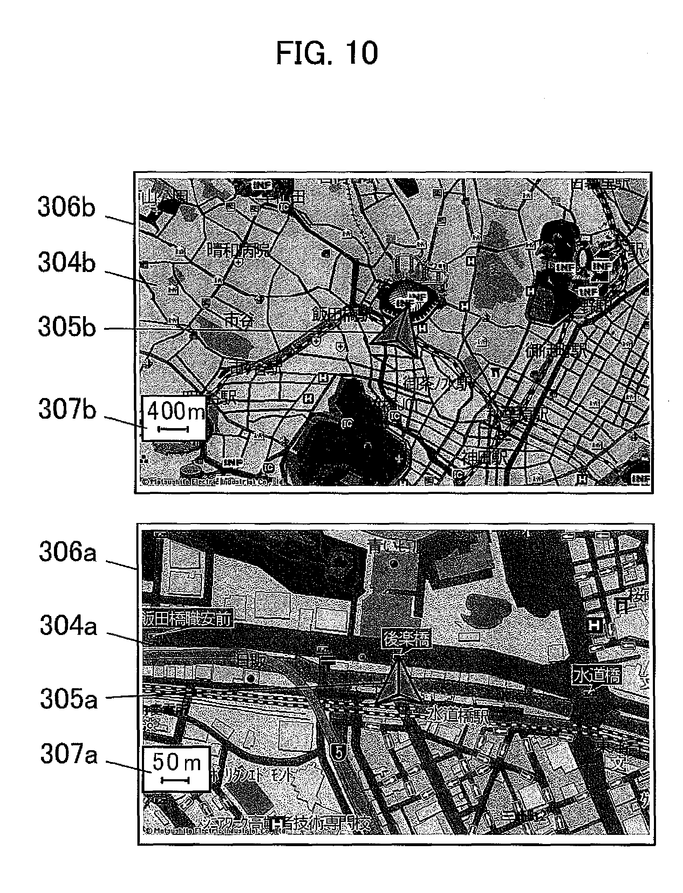

In step **S601** of the second round, the value **Cnt** of the counter is "2". Therefore, the relational expression results in 4 > 2. The determination is made that the answer is "YES". The CPU 10 proceeds to step **S602,** and performs an operation the same as that of the first round. As a result, the first and second display sections **30** and **31** display the first and second composite map images **306a** and **306b** as shown in FIG. **10**.

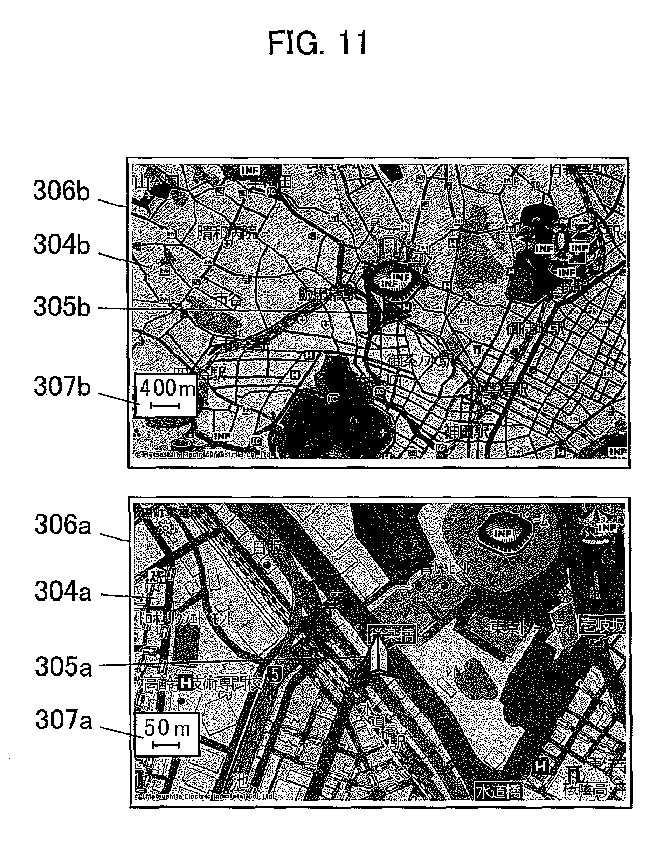

In step **S601** of the third round, the value **Cnt** of the counter is "3". Therefore, the relational expression results in 4 > 3. The determination is made that the answer is "YES". The CPU **10** proceeds to step **S602,** and performs an operation the same as those of the first and second rounds. As a result, the first and second display sections **30** and **31** display the first and second composite map images **306a** and **306b** as shown in FIG. **11****.**

Therefore, the map display system can reduce a processing workload on a processor by reason that the second map image **304b** is not updated in the first to third rounds of operations based on the flow chart of FIG. **5**.

In step **S601** of the fourth round, the value **Cnt** of the counter is "4". Therefore, the relational expression results in 4 > 4. The determination is made that the answer is "NO". The CPU **10** proceeds to step **S603,** resets the value **Cnt** of the counter to zero in step **S603,** and updates the second map image **304b** in step **S604** on the basis of the current position and the current traveling direction of the vehicle in order to point the second mark image 305b in an upward direction at the center of the screen.

In step **S605,** the CPU **10** points the first mark image **305a** in an upward direction at the center of the first map image **304a** held in the RAM **11** without being updated in step **S602** of this round, and generates the first composite map image **306a** by overlaying the updated first mark image **305a** and the first scale image **307a** on the first map image **304a**.

The CPU **10** executes a routine corresponding to step **S604** of this round, in other words, updates the second mark image **305b** in step **S604** of this round. Then, the CPU **10** updates the second mark image **305b**, on the basis of the current position and the current traveling direction of the vehicle, on the updated second map image **304b**, and generates the second composite map image **306b** by overlaying the updated second mark image **305b** and the second scale image **307b** on the second map image **304b**.

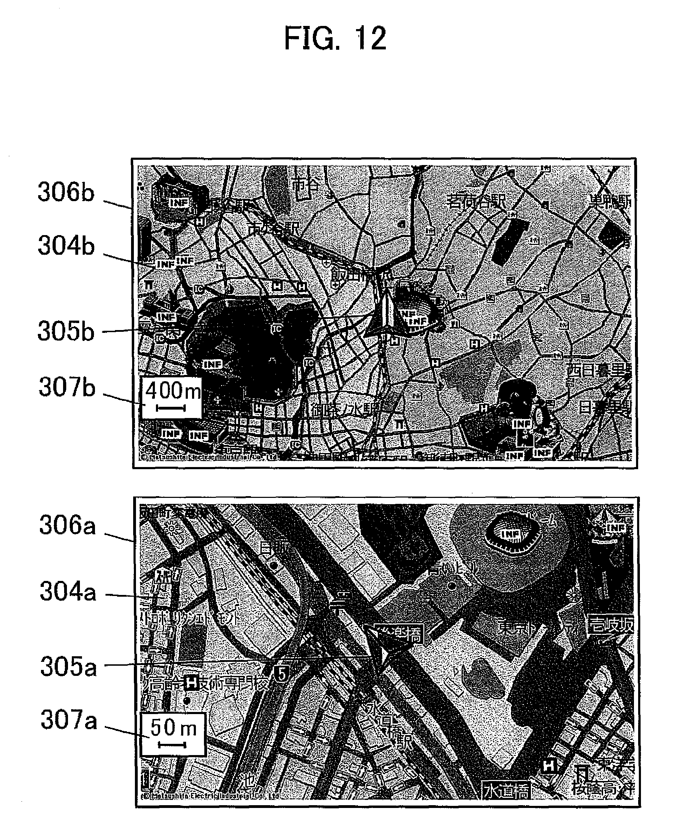

In step **S607,** the first and second composite map images **306a** and **306b** are respectively transmitted to the first and second display devices **30** and **31** at the same time, and displayed as shown in FIG. **12**.

In step **S608,** the value **Cnt** of the counter is then increased to a numeral "1".

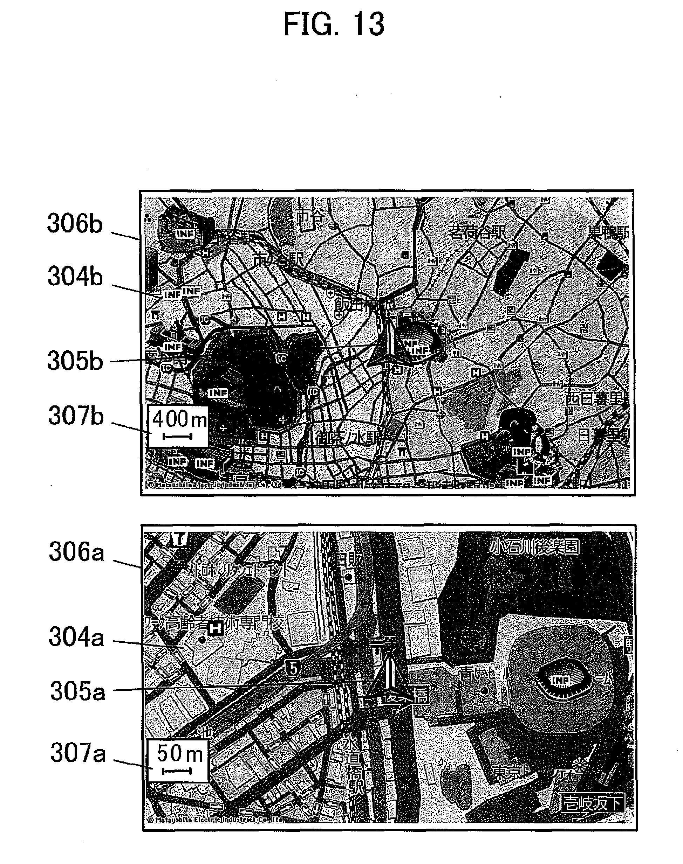

In the fifth round, the CPU **10** executes a routine the same as that of the first round. The determination is made that the answer is "YES" in step **S601.** The CPU **10** proceeds to step **S603,** and generates the first and second composite map images 306a and 306b as shown in FIG. **13**.

From the foregoing description, it will be understood that the map display device according to the present invention can reduce a processing workload on the CPU **10** by reason that while the CPU **10** successively updates the first map image **304a** indicative of a map with a small scale three times so that the first mark image **305a** directs in an upward direction in the first map image **304a**, the CPU **10** updates the direction and the position of the second mark image **305b** without updating the second map image **304b** indicative of a map with a large scale, if the CPU **10** updates the second map image **304b** indicative of a map with a large scale so that the second mark image 305b directs in an upward direction in the next round, the CPU **10** updates the direction and the position of the first mark image 305a without updating the first map image **304a** indicative of a map with a small scale, and the CPU **10** repeats the above-mentioned operation. Additionally, the displacement of the vehicle on the second map image **304b** indicative of a map with a large scale is smaller than that of the vehicle on the first map image **304a** indicative of a map with a small scale. Therefore, it is not so important in a practical situation that the update rate of the second map image is low in comparison with that of the second map image.

In the map display system **1**, the geographic information **302** for a map with a scale A and the geographic information **302** for a map with a scale B may be selectively loaded to a shared memory section of the RAM **11** by reason that a period in which the first map image **304a** is generated overlaps with a period in which the second map image **304b** is generated overlaps with a period in which the first map image **304a** is generated. Therefore, the map display system **1** according to the present invention can be reduced in the capacity of the RAM **11**, and in production cost.

It is preferable that the map display system **1** perform the operation in steps **S605** and **S606** regardless of whether the answer in step **S601** is "Yes" or "No" as shown in FIG. **6**. More specifically, the first and second mark images **305a** and **305b**, which are smaller in quantity of data than the first and second map images **304a** and **305a**, are updated in the same period. Therefore, even if the first map image **304a** and the second map image **304b** are updated in respective periods different from each other, the current position and the traveling direction of the vehicle are accurately indicated on the maps of the display devices **30** and **31**.

In the above explanation, the map display system **1** comprises a first input device **40** and a second input device **41** physically-separated from the first input device **40**. However, the first and second input devices **40** and **41** may be collectively constituted by an input device.

While there has been explained in the foregoing description about the fact that the first and second mark images **305a** and **305b** are respectively overlaid on the first and second map images **304a** and **304b**, the first and second mark images **305a** and **305b** may not be respectively overlaid on the first and second map images **304a** and **304b**.

### Industrial Applicability of the Invention

The map display system according to the present invention is suitable for in-vehicle navigation system or the like to be required to reduce in processing workload on a processor.

## Claims

1. A map display system comprising:
a first map image generating section configured to generate a first map image;
a second map image generating section configured to generate a second map image larger in scale than said first map image at intervals lower than intervals which said first map image is generated at; and
a display section configured to display said first map image generated by said first map image generating section and said second map image generated by said first map image generating section.

2. A map display system according to claim 1, wherein
said second map image generating section generates said second map image at intervals based on a ratio between the scale of said first map image and the scale of said second map image.

3. A map display system according to claim 1, further comprising:
a first mark image generating section configured to generate a first mark image indicating a current position and a traveling direction of a moving object, said first mark image being overlaid on said first map image; and
a second mark image generating section configured to generate a second mark image indicating said current position and said traveling direction of said moving object, said second mark image being overlaid on said second map image.

4. An integrated circuit, comprising:
a first map image generating section configured to generate a first map image;
a second map image generating section configured to generate a second map image larger in scale than said first map image at intervals lower than intervals which said first map image is generated at; and
a transferring section configured to transfer said first map image generated by said first map image generating section and said second map image generated by said first map image generating section to an external display section.
